# EUROPEAN PATENT SPECIFICATION

(11) **EP 0 366 186 B1**
(45) Date of publication and mention of the grant of the patent: **09.06.1993**
(21) Application number: 89202630.3
(22) Date of filing: 17.10.1989
(51) Int. Cl.: C02F 3/28

(54) **Upflow sludge-bed reactor for anaerobic purification**
Schlammschwebefilterreaktor für anaerobe Reinigung
Réacteur à lit de boue et à mouvement ascensionnel pour la purification anaérobie

(30) Priority: 17.10.1988 NL 8802553
(43) Date of publication of application: 02.05.1990
(73) Proprietor: DHV Water B.V., NL-3818 EX Amersfoort (NL)
(72) Inventor: Lettinga, Gatze, Prof.Dr. Ir., NL-6721 HS Bennekom (NL)
(74) Representative: Kupecz, Arpad

(56) References cited:
- WO-A-87/05593
- GB-A- 1 491 502
- JOURNAL WPCF, vol. 54, no. 11, November 1982, page 1482-1492; R.R. van der MEER et al.: "ANAEROBIC TREATMENT OF WASTEWATER: THE GAS-LIQUID-SLUDGE SEPARATOR"
- TU Delft, Afstudeerprojecten Juli 1988, page 106-107, Gezondheidstechniek, Waterbeheersing, Hoofdontwerp "ONDERZOEK NAAR HET HYDRAULISCH FUNKTIONEREN VAN EEN UASB-REAKTOR", Student: W.J. Scheele

## Description

The invention relates to an upflow sludge-bed reactor for anaerobic purification with a feed distribution system, a fermentation room and a gas collector-sludge separation device.

A similar reactor is, for instance, known from the publication of G. Lettinga et al., Biotechnology and Bioengineering, Vol. XXII, page 699-734 (1980).

Ever since the introduction of this reactor in waste water purification only few of the drawbacks previously considered to be representative remained, while all supposed advantages with respect to aerobic methods did appear to be correct.

Yet for a long time there clings to the present system the drawback, that the process is not applicable in waste water purification. The conventional reactor system works properly when applied to largely dissolved types of waste water at temperatures above about 20° C, but the system starts to show shortcomings while applying lower temperature-conditions to more complex (that is partially dissolved) and more diluted types of waste water, as they are very frequently occurring in sewage. Therefore a search has been made already for the presence of packing material in the sludge-bed reactor. In an article of G. Lettinga et al., Wat. Sci. Tech. Vol. 15, page 177-195 (1983) the result of the application of packing material in the sludge-bed reactor is described. The disadvantages of the presence of packing material preponderate over the advantage of a better sludge retention.

A similar reactor is also known from WO-A-87 05593, describing a two-steps-process in a fermentation reactor, wherein a biological filter in form of packing material or sheets in an inclined position is suspended over the fermentation chamber.

It was now found that a better sludge retention with slight channeling, less loss of reactor volume and less obstruction can be obtained with an upflow sludge-bed reactor for anaerobic purification with a feed distribution system, a fermentation room and a gas collector-sludge separation device, characterized in that for improvement of the sludge-water contact at least a sheet, fleece, cloth and/or diaphragm having a roughened surface is suspended in a vertical position in the fermentation room. Since mainly a high sludge retention is pursued, it is advantageous when the sheet, fleece, cloth and/or diaphragm does comprise a permeable material. The permeability may be inherent to the material, but may be obtained, too, by perforation of the sheet, fleece, cloth and/or diaphragm. The applied perforation may increase in size from below to above in order to promote the sludge-water contact.

In order to promote the sludge-water contact it is advantageous that the sheet, fleece, cloth and/or diaphragm is manufactured from synthetic resin, rubber or natural materials, while the channeling can be better reduced if the sheet, fleece, cloth or diaphragm possesses elasticity, as well as if by using these sheets, fleeces, cloths and/or diaphragms a suitable formation of compartments is realized in the fermentation room.

The real reaction of the sludge with the compounds which are to be digested in the waste water begins at about 40 cm above the feed distribution system, so that the sheet, fleece or diaphragm preferentially reaches from 40-60 cm above the feed distribution system to 0-30 cm below the lower edge of the gas collector-sludge separation device.

The total length of the sheet is dependent amongst others from the characteristics of the waste water to be treated, and amounts to 1,2 - 2 m, in which then from 0,4 m of the lower edge an increasing number of larger holes (1-4 cm) are introduced.

In a further preferential embodiment of the invention the anaerobic reactor system is sub-divided into a number of modules, which are flown through one after another. For the required proper conveyance of liquid a hydrostatic head of 30-60 cm exists between the modules. Preferentially a drain is applied to each module for draining off the sludge excess. This embodiment of the invention further opens the possibility of execution of one of the modules which are to be flown through, for instance the last one, in such a form, that it can be committed as an expanded granular sludge bed. With this the result of the purification is yet enhanced.

The invention is now further elucidated by the accompanying drawings, in which
Fig. 1 is a perspective view of a first embodiment of the invention;
Fig. 2 is a perspective view of a series connection of units according to fig. 1; and
Fig. 3 is a perpendicular cross-section of a further device according to the invention with series connection.

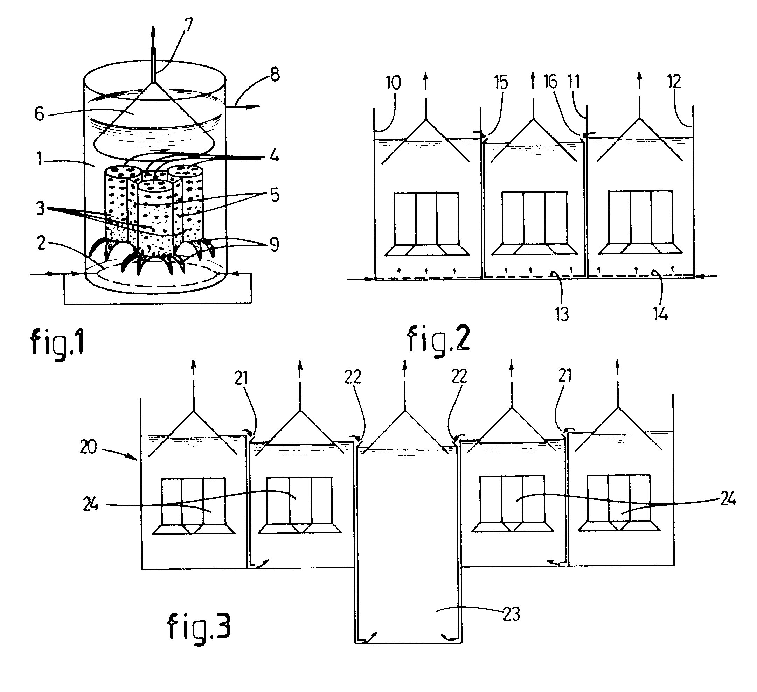

In fig. 1 the apparatus, which is represented diagrammatically, has a cylindrical fermentation room (1), in which over the feed distribution system (2) is suspended in this case an assembly (3) of three cylindrical compartments (4), which have been interconnected by diaphragms (5). The whole has been suspended from cables or bars, or is connected to the wall of the fermentation room (1) by diaphragms (not shown).

Over the assembly (3) of compartments (4) is provided the gas collector (6), which has been shown only schematically and may also have other shapes, namely may comprise three or more conical gas collectors.

For clearness sake the distance between the lower edge of the gas collector (6) and the upper edge of the assembly (3) has been shown in an exaggerated manner; in practice this distance will amount to 0-30 cm and will only partly be visible under the gas collector hood (5) or not be visible at all. Finally the gas collector hood is provided with a gas discharge (7) and the water discharge is present at (8).

Feed water enters the reactor through the feed distribution system (2), which shall attend to the obtention of an upward flow as uniform as possible. At a certain distance above this system the gas generation is effected. The fan-shaped inlet pieces (9) of the compartments (4) collect liquid, but especially because of appearing gas production a few rapids will appear giving rise to a limited extent of liquid circulation, which counteracts serious channeling and loss of reactor volume (dead spaces), while the appearance of obstructions is precluded.

The apparatus according to fig. 2 comprises essentially three cascade appliances (10, 11, 12) in series connection, which are constructed generally according to the concept suggested in fig. 1. Only the distribution system (13) of the second appliance (11) is fed from the overflow line (15) in appliance (10) and also the distribution system (14) of the third appliance (12) is fed from the overflow line (16) in appliance (11).

The apparatus (20) which is shown in outline in fig. 3, works according to the same principle with overflow lines (21, 22). Only here the third cascade step is an extended reactor (23), which may work according to an other principle, namely with a partially expanded bed. An assembly (24) as indicated in the first two steps is no longer necessary in this reactor (23).

## Claims

1. An upflow sludge-bed reactor for anaerobic purification with a feed distribution system, a fermentation room and a gas collector-sludge separation device, **characterized** in that for improvement of the sludge-water contact at least a sheet, fleece, cloth and/or diaphragm having a roughened surface is suspended in a vertical position in the fermentation room.

2. An upflow sludge-bed reactor according to claim 1, **characterized** in that by means of sheets, fleeces, cloths and/or diaphragms a suitable formation of compartments in a large part of the fermentation room is obtained.

3. An upflow sludge-bed reactor according to claim 1, **characterized** in that the sheet, fleece, cloth and/or diaphragm comprising a permeable material or either a material comprising an in upward direction increasingly porous structure.

4. An upflow sludge-bed reactor according to claim 3, **characterized** in that the material has a fibrous relatively open structure.

5. An upflow sludge-bed reactor according to claims 1-4, **characterized** in that the sheet, fleece, cloth and/or diaphragm is perforated.

6. An upflow sludge-bed reactor according to claim 5, **characterized** in that the perforation holes in the sheet, fleece, cloth and/or diaphragm are increasing in size in upward direction.

7. An upflow sludge-bed reactor according to claims 1-6, **characterized** in that the sheet, fleece, cloth and/or diaphragm possesses elasticity and mobility.

8. An upflow sludge-bed reactor according to claim 7, **characterized** in that the sheet, fleece, cloth and/or diaphragm is manufactured from synthetic resin, rubber or natural materials.

9. An upflow sludge-bed reactor according to claims 1-8, **characterized** in that the sheet, fleece, cloth and/or diaphragm reaches from 40-60 cm above the feed distribution system up to 0-30 cm below the lower edge of the gas collector.

10. An upflow sludge-bed reactor according to claims 1-9, **characterized** in that the sheet, fleece, cloth and/or diaphragm has a length of 1,2 - 2 m, depending amongst others from the characteristics of the waste water to be treated, in which from 0,4 m of the lower edge an increasing number of larger holes (2-4 cm) are introduced.

11. An upflow sludge-bed reactor according to claims 1-10, **characterized** in that it is subdivided in two or more reactor modules, which are flown through one after another.

12. An upflow sludge-bed reactor according to claim 11, **characterized** in that a hydrostatic head of 30-60 cm exists between the modules.

13. An upflow sludge-bed reactor according to claim 11, **characterized** in that in each module a drain for sludge excess is present.

14. An upflow sludge-bed reactor according to claims 11-13, **characterized** in that one or more of the modules is executed in such a manner that it can be committed as an expanded granular sludge bed.

## Patentansprüche

1. Ein Aufwärtsstrom-Schlammbettreaktor zur anaeroben Reinigung mit einem Zulaufverteilersystem, einem Faulraum und einer Gassammler-Schlammtrennvorrichtung,
dadurch **gekennzeichnet,**
daß zur Verbesserung des Schlamm-Wasserkontaktes wenigstens eine Platte, ein Vlies, ein Tuch und/oder eine Membran mit einer aufgerauhten Oberfläche in einer vertikalen Stellung im Faulraum aufgehängt ist.

2. Ein Aufwärtsstrom-Schlammbettreaktor gemäß Anspruch 1,
dadurch **gekennzeichnet,**
daß mittels Platten, Vliesen, Tuche und/oder Membranen eine geeignete Bildung von Unterteilungen in einem großen Teil des Faulraums erhalten wird.

3. Ein Aufwärtsstrom-Schlammbettreaktor gemäß Anspruch 1,
dadurch **gekennzeichnet,**
daß die Platte, das Vlies, das Tuch und/oder die Membrane ein durchlässiges Material oder irgend ein Material aufweist, welches in Aufwärtsrichtung eine zunehmend poröse Struktur hat.

4. Ein Aufwärtsstrom-Schlammbettreaktor gemäß Anspruch 3,
dadurch **gekennzeichnet,**
daß das Material eine faserige, relativ offene Struktur hat.

5. Ein Aufwärtsstrom-Schlammbettreaktor gemäß Ansprüchen 1-4,
dadurch **gekennzeichnet,**
daß die Platte, das Vlies, das Tuch und/oder die Membrane perforiert ist.

6. Ein Aufwärtsstrom-Schlammbettreaktor gemäß Anspruch 5,
dadurch **gekennzeichnet,**
daß die Perforationslöcher in der Platte, dem Vlies, dem Tuch und/oder der Membrane in ihrer Größe in Aufwärtsrichtung zunehmen.

7. Ein Aufwärtsstrom-Schlammbettreaktor gemäß Ansprüchen 1-6,
dadurch **gekennzeichnet,**
daß die Platte, das Vlies, das Tuch und/oder die Membrane Elastizität und Beweglichkeit aufweist.

8. Ein Aufwärtsstrom-Schlammbettreaktor gemäß Anspruch 7,
dadurch **gekennzeichnet,**
daß die Platte, das Vlies, das Tuch und/oder die Membrane aus synthetischem Harz, Gummi oder natürlichen Materialien hergestellt ist.

9. Ein Aufwärtsstrom-Schlammbettreaktor gemäß Ansprüchen 1-8,
dadurch **gekennzeichnet,**
daß die Platte, das Vlies, das Tuch und/oder die Membrane von 40-60 cm oberhalb des Zulaufverteilersystems bis hin zu 0-30 cm unterhalb der Unterkante des Gassammlers reicht.

10. Ein Aufwärtsstrom-Schlammbettreaktor gemäß Ansprüchen 1-9,
dadurch **gekennzeichnet,**
daß die Tafel, das Vlies, das Tuch und/oder die Membrane eine Länge von 1,2-2 m hat, abhängig unter anderem von den charakteristischen Eigenschaften des zu behandelnden Abwassers, in welche ab 0,4 m von der Unterkante eine zunehmende Anzahl von größeren Löchern (2-4 cm) angebracht sind.

11. Ein Aufwärtsstrom-Schlammbettreaktor gemäß Ansprüchen 1-10,
dadurch **gekennzeichnet,**
daß er in zwei oder mehr Reaktormodule unterteilt ist, die nacheinander durchflossen werden.

12. Ein Aufwärtsstrom-Schlammbettreaktor gemäß Anspruch 11,
dadurch **gekennzeichnet,**
daß zwischen den Modulen ein hydrostatischer Kopf von 30-60 cm vorhanden ist.

13. Ein Aufwärtsstrom-Schlammbettreaktor gemäß Anspruch 11,
dadurch **gekennzeichnet,**
daß in jedem Modul ein Auslaß zur Schlammabführung vorhanden ist.

14. Ein Aufwärts-Schlammbettreaktor gemäß Ansprüchen 11-13,
dadurch **gekennzeichnet,**
daß einer oder mehrere der Module in der Weise ausgeführt ist, daß er als Bläh-Granulat-Schlammbett verwendet werden kann.

## Revendications

1. Réacteur à refoulement de boue en lit pour purification anaérobie avec un système d'alimentation-distribution, une chambre de fermentation et un dispositif de séparation des boues à collecteur de gaz, ***caractérisé en ce que*** pour améliorer le contact boue-eau au moins une feuille, une nappe, une étoffe et/ou un diaphragme ayant une surface rendue rugueuse est suspendu(e) en position verticale dans la chambre de fermentation.

2. Réacteur à refoulement de boue en lit selon la Revendication 1, ***caractérisé en ce qu'***au moyen des feuilles, nappes, étoffes et/ou diaphragmes est obtenue une structure appropriée de compartiments dans une grande partie de la chambre de fermentation.

3. Réacteur à refoulement de boue en lit selon la Revendication 1, ***caractérisé en ce que*** la feuille, nappe, étoffe et/ou diaphragme comprend soit un matériau perméable soit un matériau dont la porosité de la structure augmente dans le sens ascendant.

4. Réacteur à refoulement de boue en lit selon la Revendication 3, ***caractérisé en ce que*** le matériau possède une structure fibreuse relativement ouverte.

5. Réacteur à refoulement de boue en lit selon les Revendications 1 à 4, ***caractérisé en ce que*** la feuille, nappe, étoffe et/ou diaphragme est perforé(e).

6. Réacteur à refoulement de boue en lit selon la Revendication 5, ***caractérisé en ce que*** les trous de perforation de la feuille, nappe, étoffe et/ou diaphragme ont une taille croissante dans le sens ascendant.

7. Réacteur à refoulement de boue en lit selon les Revendications 1 à 6, ***caractérisé en ce que*** la feuille, nappe, étoffe et/ou diaphragme possède élasticité et mobilité.

8. Réacteur à refoulement de boue en lit selon la Revendication 7, ***caractérisé en ce que*** la feuille, nappe, étoffe et/ou diaphragme est fabriqué(e) à partir de matériaux en résine synthétique, en caoutchouc ou naturels.

9. Réacteur à refoulement de boue en lit selon les Revendications 1 à 8, ***caractérisé en ce que*** la feuille, nappe, étoffe et/ou diaphragme va de 40 à 60 cm au-dessus du sytème d'alimentation-distribution jusqu'à 0 à 30 cm au-dessous du bord inférieur du collecteur de gaz.

10. Réacteur à refoulement de boue en lit selon les Revendications 1 à 9, ***caractérisé en ce que*** la feuille, nappe, étoffe et/ou diaphragme possède une longueur de 1,2 à 2 m, en fonction entre autres des caractéristiques de l'eau d'égout à traiter, longueur sur laquelle à partir de 0,4 m du bord inférieur un nombre croissant de trous plus importants (2 à 4 cm) sont introduits.

11. Réacteur à refoulement de boue en lit selon les Revendications 1 à 10, ***caractérisé en ce qu'***il est subdivisé en deux modules de réacteur ou plus qui sont traversés l'un après l'autre.

12. Réacteur à refoulement de boue en lit selon la Revendication 11, ***caractérisé en ce qu'***une chute hydrostatique de 30 à 60 cm existe entre les modules.

13. Réacteur à refoulement de boue en lit selon la Revendication 11, ***caractérisé en ce que*** dans chaque module est prévu un drain pour l'excès de boue.

14. Réacteur à refoulement de boue en lit selon les Revendications 11 à 13, ***caractérisé en ce qu'***un ou plusieurs module(s) est(sont) réalisés d'une telle manière qu'il(s) puisse(nt) être mis en oeuvre comme un lit expansé de boue grumeleuse.
